# EUROPEAN PATENT SPECIFICATION

(11) **EP 0 448 221 B1**
(45) Date of publication and mention of the grant of the patent: **24.01.1996**
(21) Application number: 91301257.1
(22) Date of filing: 18.02.1991
(51) Int. Cl.: C08L 77/00

(54) **Flame-retardant nylon resin composition**
Flammhemmende Nylonharzzusammensetzung
Composition retardatrice de flamme de résine de nylon

(30) Priority: 19.02.1990 JP 37998/90
(43) Date of publication of application: 25.09.1991
(73) Proprietor: TORAY INDUSTRIES, INC., Tokyo 103 (JP)
(72) Inventor: Togashi, Osamu, Midori-ku, Nagoya-shi, Aichi, 458 (JP); Umetsu, Hideyuki, Midori-ku, Nagoya-shi, Aichi, 458 (JP); Iwamoto, Masatoshi, Ama-gun, Aichi, 498 (JP)
(74) Representative: Coleiro, Raymond

(56) References cited:
- EP-A- 0 288 269
- EP-A- 0 410 301
- US-A- 4 141 880
- DATABASE WPI, accession no. 76-42864x [23], Derwent Publications Ltd, London, GB; & JP-A-51 047 044 (TEIJIN K.K.)
- PATENT ABSTRACTS OF JAPAN, vol. 12, no. 92 (C-483), 25th March 1988;
- & JP-A-62 223 260 (ASAHI CHEM. IND. CO., LTD) 01-10-1987

## Description

The present invention relates to a flame-retardant nylon polymer moulding composition, hereinafter referred to as a nylon resin composition which exhibits a good stability when it is in a molten state and is especially suitable for use in surface mounting technology. More particularly, it is concerned with a flame-retardant nylon resin composition which, owing to its good stability in a molten state, resists heat encountered during the soldering dperations of surface mounting and does not suffer decomposition and degradation during melt molding.

A nylon improves in heat resistance as its melting point rises. On the other hand, a nylon with a high melting point needs a high processing temperature which causes decomposition and degradation during melt molding, giving rise to molded items having a poor appearance. Thus, it is difficult to achieve both a high heat resistance and ease of processing.

In an attempt to overcome these difficulties various compositions have been proposed which contain a polyamide copolymer and a fire retardant . Thus, it is known that a polyamide copolymer having good heat resistance and moldability is obtained by copolymerizing hexamethylene terephthalamide and hexamethylene adipamide or by copolymerizing hexamethylene terephthalamide and caproamide (see JP-A-206827/1985, JP-A-159422/1986, and JP-A-283653/1986). Nylon resin compositions used in the electric and electronic industries are required to meet the UL-94 standard for a high degree of flame retardance (established by the Underwriters Laboratores in the U.S.). To this end, a variety of halogen-based flame-retardants have been proposed. It is known to incorporate, in a polyamide, a brominated polystyrene as a flame-retardant and additionally a metal oxide as an auxiliary flame-retardant (see JP-A-47044/1976 and JP-A-1403/1976). However, hexamethylene terephthalamide, for example, has too high a melting point for efficient blending into a brominated polystyrene. In addition, JP-A-116054/1979 discloses a composition composed of nylon and a brominated polyphenylene ether, and attempts to improve this composition by incorporation of further additives are disclosed in JP-A-223260/1987 and JP-A-138264/1989. In particular, JP-A-138264/1989 discloses a blend of 100 parts hexamethylene terephthalamide (nylon 6T)/hexamethylene isophthalamide (nylon 6I) copolymer, 10-100 parts brominated polystyrene, 0.5-100 parts NaSbO₂ and 0.05-50 parts MgO or ZnO. However, since conventional soldering materials melt at around 250- 260°C, it is necessary to effect soldering at temperatures above this, typically at 280-300°C. A nylon 6T/6I copolymer containing less than about 70% 6T has too low a melting point to withstand such high temperatures. Thus, where a surface mounted electrical component (as is usual) has a casing made from such a resin, it is necessary to effect soldering of the various components to the surface by a local heating technique which avoids subjecting the casing to soldering heat.

EP-A-0410301, acknowledged under Art. 54(3) EPC, discloses a flame retardant composition containing A) 10- 98 wt% of a copolyamide built up essentially from (a₁ ) 40- 90 wt% of units derived from terephthalic acid and ethylene diamine, (a₂ ) 0-50 wt% of units derived from ε- caprolactam and (a₃ ) 0-60 wt% of units derived from adipic acid and hexamethylenediamine, with at least 10 wt% of the copolyamide of (a₂ ) and/or (a₃ ), B) 1-30 wt% of a brominated polystyrene oligomer or mixture and C) a metal oxide.

We have conducted research into the development of a flame-retardant composition which can be made into a molded item having high heat resistance and flame retardancy and also taking on a good appearance free of blooming.

As a result of these investigations, it was found surprisingly that the above-mentioned problems can be solved if a specific nylon is combined with a specific flame-retardant, auxiliary flame-retardant, and reinforcing agent.

Thus, the present invention provides a flame-retardant nylon resin composition which comprises, by weight of the total weight of the composition:
(A) 30-90 wt% of a nylon copolymer comprising 80- 20 wt% of hexamethylene terephthalamide units and 20-80 wt% of hexamethylene adipamide or caproamide units,
(B) 5-35 wt% of a flame-retardant polymer consisting of a halogenated polyphenylene ether, which polymer contains 50-70% by weight of the polymer of halogen and has a weight-average molecular weight of at least 5000,
(C) 1-10 wt% of at least one auxiliary flame-retardant selected from antimony oxide, tin oxide, iron oxide, and zinc oxide, and
(D) 0-50 wt% of a reinforcing agent, preferably an inorganic reinforcing agent,
which composition is free from sodium antimonate.

In a resin composition according to the present invention the nylon copolymer (designated as component (A) above) is composed of 80-20 wt% of hexamethylene terphthalamide units and 20-80 wt% of hexamethylene adipamide or caproamide units. This nylon copolymer may be a polyamide copolymer (referred to hereinafter as 6T/66 copolyamide) which may be formed by the copolymerization of hexamethylene ammonium terephthalate with hexamethylene ammonium diadipate, or a polyamide copolymer (referred to hereinafter as 6T/6 copolyamide) which may be formed by the copolymerization of hexamethylene ammonium terephthalate with ∈-caprolactam or 6-aminocaproic acid or both. In the case of 6T/66, the ratio (by weight) of copolymerization i.e. 6T:66, should be from 80:20 to 20:80, preferably from 65:35 to 25:75, and more preferably from 59:41 to 30:70. In the case of 6T/6, the ratio (by weight) of copolymerization, i.e. 6T:6, should be from 80:20 to 20:80, preferably from 78:22 to 45:55, and more preferably from 78:22 to 60:40. With the 6T component less than 20 wt%, the copolymer polyamide has a low melting point and hence is poor in heat resistance. Conversely, with the 6T component in excess of 80 wt%, the copolymer polyamide has a high melting point and hence has improved heat resistance, but needs a high processing temperature, which leads to the thermal decomposition of the polymer. The degree of polymerization of the 6T/66 and 6T/6 copolyamides is not particularly limited. Those having a relative viscosity of 1.5 to 5.0 (measured in 1% sulfuric acid solution at 25°C) are particularly useful.

The resin composition of the present invention should contain 6T/66 copolyamide or 6T/6 copolyamide in an amount of 35-80 wt%, preferably 40-80 wt%, especially 50-80 wt% by weight of the total weight of the composition. With an amount less than 30 wt%, the resin composition is poor in mechanical strength (such as impact resistance). Conversely, with an amount in excess of 80 wt%, the resin composition is not so good in heat resistance, stiffness, creep resistance, dimensional stability, and warpage and deformation properties.

There are no particular limitations on the process for the production of the copolyamide resin used in a composition of the present invention. It may be produced easily by a conventional melt polymerization, which consists of preparing a prepolymer and subjecting the prepolymer to solid-phase polymerization or melt-mixing in an extruder to increase the degree of polymerization. The prepolymer is prepared by heating at 150-320°C an aqueous solution containing 6T salt (a salt formed from hexamethylenediamine and terephthalic acid) and 66 salt (a salt formed from hexamethylenediamine and adipic acid) or containing 6T salt and ∈-caprolactam or 6-aminocaproic acid. An alternative process consists of subjecting 6T salt and 66 salt (or 6-aminocaproic acid) directly to solid-phase polymerization at a temperature lower than the melting point.

The copolyamide resin composition of the present invention may have incorporated in it a variety of additives such as a viscosity modifier, pigment, dye, antioxidant, and heat resistance improver, in such amounts that they do not have an unduly adverse effect upon its characteristic properties.

The resin composition of the present invention contains a flame-retardant polymer designated as component (B). This flame-retardant is based on halogenated polyphenylene ether. The flame retardane polymer (B) contains 50-70 wt%, by weight of the flame retardant polymer, of halogen and has a weight-average molecular weight higher than 5000, preferably higher than 20,000 and more preferably higher than 28,000. With a weight-average molecular weight lower than 5000, the flame-retardant polymer has an adverse effect on the appearance of the molded item and increases the weight the resin composition loses on heating. An adequate amount of the flame-retardant in the composition is 5-35 wt%. With an amount less than 5 wt%, the flame-retardant does not produce the desired flame retardancy. Conversely, with an amount in excess of 35 wt%, the flame-retardant has an adverse effect on the mechanical properties such as impact strength.

In a composition according to the present invention, the halogen-containing flame-retardant is used in combination with an auxiliary flame-retardant designated as component (C). The auxiliary flame-retardant is a specific metal oxide which is selected from one or more of antimony oxide, tin oxide, iron oxide and zinc oxide. Most effective among these metal oxides is antimony oxide. An adequate amount of the auxiliary flame-retardant is 1-10 wt%, preferably 2-8 wt% by weight of the total composition.

The resin composition of the present invention may contain a reinforcing agent designated as component (D). This may be, for example, fibrous reinforcement such as glass fiber and carbon fiber, glass beads, talc, kaolin, wollastonite and mica. Preferable among them is glass fiber. Glass fiber materials suitable for use in compositions according to the present invention are those generally used as a reinforcing agent for thermoplastics resins and thermosetting resins. Preferred glass fiber materials take the form of glass rovings, chopped strand glass, and glass yarn made of continuous glass filaments 3-20 µm in diameter. The reinforcing agent should be added in an amount of 0-50 wt%, depending on the use of the molded item.

The resin composition of the present invention may have, incorporated in it, one or more known additives such as a stabilizer, nucleating agent, blowing agent, auxiliary blowing agent, antistatic agent, pigment, and dye in amounts such that they do not have an unduly adverse effect upon its characteristic properties.

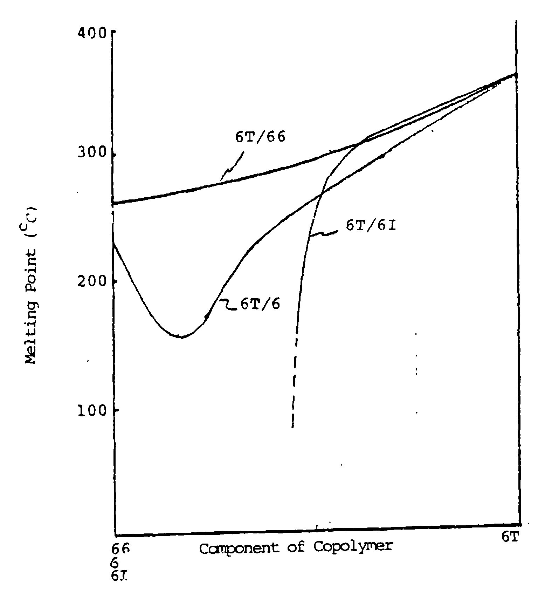

A particularly surprising aspect of nylon 6T/66 and 6T/6 copolymers is their melting profile as the proportional amounts of 6T and 66 or 6T and 6 vary. These are illustrated in the accompanying drawing. This shows that the melting profile of a 6T/6I copolymer as used in a composition of JP-A-138264/1989 is such that the melting point approaches the uppermost value only when a relatively high proportion of 6T is present. In contrast, a 6T/66 copolymer containing as much as 80% 66 has a relatively high melting point. This enables a composition containing the copolymer to be capable of producing a product having the excellent properties produced by the nylon 66 component and yet still have a sufficiently high melting point.

Thus, the nylon 6T/66 copolymer has a melting point sufficiently high that the copolymer remains solid at soldering temperatures but sufficiently low to allow efficient blending with a halogenated polyphenylene ether and efficient processing. Furthermore, a nylon resin composition embodying the invention does not suffer degradation or decomposition at soldering temperatures above 250-260°C. This has enabled surface mounting technology to be revolutionised. Thus, instead of effecting soldering by subjecting localised regions to soldering heat (in order to avoid heating of the resin casing) it is now possible to effect soldering merely by feeding the entire surface mounted component through an oven set at the soldering temperature.

Owing to the high degree of flame retardancy, good external appearance, and good heat resistance of moulded articles produced from compositions embodying the invention, these articles find particular use as items for electric and electronic parts, automotive parts, and building materials. They are especially useful in mounted electrical parts, particularly those found in motor cars.

The invention will be described in more detail with reference to the following Examples and Comparative Examples. The resin compositions in the Examples and Comparative Examples were examined for characteristic properties according to the following test methods.
(1) Vertical burning test
   The test was conducted as follows according to the UL standard. A test specimen vertically clamped at its upper end is burned by the application of a standard flame to its lower end for 10 seconds. The time required for the test specimen to burn until the fire goes out is measured (the "first flame" time). Immediately after that, the test specimen is burned again by the application of a standard flame to its lower end for 10 seconds. The time required for the test specimen to burn until the fire goes out is measured (the "second flame" time). The measurements are repeated for five test specimens. The total flame time of ten measurements is designated as T, and the maximum value in ten measurements is designated as M. The test speciment is classed as V-0 if T is less than 50 seconds and M is less than 10 seconds, the flame does not reach the clamp and burning melt does not drip from the flame to an extent such that it can ignite cotton placed 12 inches below the test speciment. Likewise, the test specimen is classed as V-1 if T is less than 250 seconds and M is less than 30 seconds and the flame does not reach the clamp and burning melt does not drip from the flame to an extent such that it ignites cotton placed 12 inches below the test speciment.
(2) Appearance of molded item
   The resin composition was injection-molded into test specimens suitable for a burning test, and the specimens were examined for surface roughening, bubbles, and color. The appearance is rated as good, poor, and bad according to the following criteria.
   good ... glossy, smooth surface
   poor ... less glossy, but smooth surface
   bad ... dull, rough surface
(3) Blooming
   The surface staining of the test specimen is examined after ageing in a hot-air oven at 140°C for 3 days. Blooming is rated as good and bad according to the following criteria.
   good ... surface not stained
   bad ... surface considerably stained
(4) Melting point (Tₘ)
   A sample (8-10 mg) is heated at a rate of 20°C/min in a differential scanning calorimeter (Perkin-Elmer, Model 7) to give a melting curve. The maximum temperature on the melting curve is designated as Tₘ.

Example 1

A copolyamide of 6T/66 (50/50 % by weight) was prepared as described below.

5.877 kg of terephthalic acid, 6.377 kg of an aqueous 64.5 wt.%-solution of hexamethylenediamine, 10.000 kg of 66 salt and 6.307 kg.of ion-exchanged water were introduced into a batch-type pressure polymerizer, which was then fully flushed by nitrogen. The monomers were then polymerized under heat and under a steam pressure of 17.5 kg/cm-G. After the polymerization system had been heated up to 220°C over a period of 2 hours with stirring, the polymerization reaction was further continued for one hour at a temperature of 220-240°C. Then, stirring was stopped, and a prepolymer condensate was ejected out from the polymerizer into water owing to the pressure difference of 17.5 kg/cm- G. The thus obtained prepolymer condensate had a viscosity of ηr=1.17 and a melting point of 224°C.

The prepolymer was dried in vacuum at 100°C for 24 hours, then placed in a kneader (Model DS 3-7.5, manufactured by Moriyama Manufacturing Co.), and heated up to 250°C over a period of about 2 hours while blowing nitrogen (3 liter/min) into it. The prepolymer was aged for a further 3 hours at 250°C and then cooled to room temperature. As a result, a white powdery polymer having a viscosity of ηr=2.70 and a melting point of 295°C was obtained.

49% by weight of the white powdery polymer, 30% by weight of glass fiber chopped strands each having a length of 3mm and a diameter of 13µm, 16% by weight of "GLC" PO- 64P and 5 parts by weight of antimony trioxide were dryblended and thereafter melted and blended by the use of a 30 mm-vent type biaxial screw extruder at a cylinder temperature of 260-330°C. The resulting blend was shaped with an injection-moulding machine to form test pieces. The thus obtained test pieces were evaluated and the results are shown in Table 1 below.

### Examples 2 to 4

In each Example, a resin composition was prepared from a copolyamide (in pellet form), glass fiber, flame-retardant, and auxiliary flame-retardant according to the formulation shown in Table 1.
. The copolyamide is any one of 6T/66 (50/50 wt%), 6T/6 (80/20 wt%) and 6T/6 (70/30 wt%).
. The glass fiber is in the form of chopped strand, 3 mm long and 13 µm in diameter.
. The flame-retardant is a brominated polyphenylene ether.
. The auxiliary flame-retardant is antimony trioxide.

All the components were mixed by melting at 260- 335°C (cylinder temperature) using a 30-mm vented twinscrew extruder. The resulting mixture (in pellet form) was formed into test pieces by injection molding. The test pieces were examined for appearance, blooming, and flammability. The results are shown in Table 1.

### Comparative Examples 1 to 10

In each Comparative Example, a resin composition was prepared in the same manner as in the above Examples from a copolyamide, glass fiber, flame retardant, and auxiliary flame-retardant according to the formulation shown in Table 2.
. The copolyamide is the same as that used in the above Examples.
. The glass fiber is the same as that used in the above Examples.
. The flame-retardant is any one of brominated polycarbonate, perchlorocyclopentadecane, tetrabromobisphenol-A (oligomer), and brominated epoxy.
. The auxiliary flame-retardant is antimony trioxide.

The resin composition was made into test pieces, which were evaluated in the same manner as in the above Examples. The results are shown in Table 2.

The resin composition in which perchlorocyclopentadecane was incorporated did not give good pellets on account of considerable thermal decomposition in the case where the copolyamide was 6T/66 (50/50 wt%) or 6T/6 (80/20 wt%) which needs a higher temperature for melt-mixing (Comparative Examples 3 and 4).

The resin composition based on 6T/6 (60/40 wt%) in which perchlorocyclopentadecane was incorporated did not meet the requirements for V-0 class (Comparative Example 10).

The resin composition in which tetrabromobisphenol-A was incorporated did not meet the requirements for V-O class (Comparative Examples 5 and 6).

The resin composition in which brominated polycarbonate was incorporated did not give good test pieces on account of considerable thermal decomposition and blowing in the melt-mixing steps (Comparative Examples 1, 2 and 9).

The resin composition in which brominated epoxy was incorporated did not give good pellets on account of excessive viscosity increase caused by gelation that took place in the melt-mixing step (Comparative Examples 7 and 8).

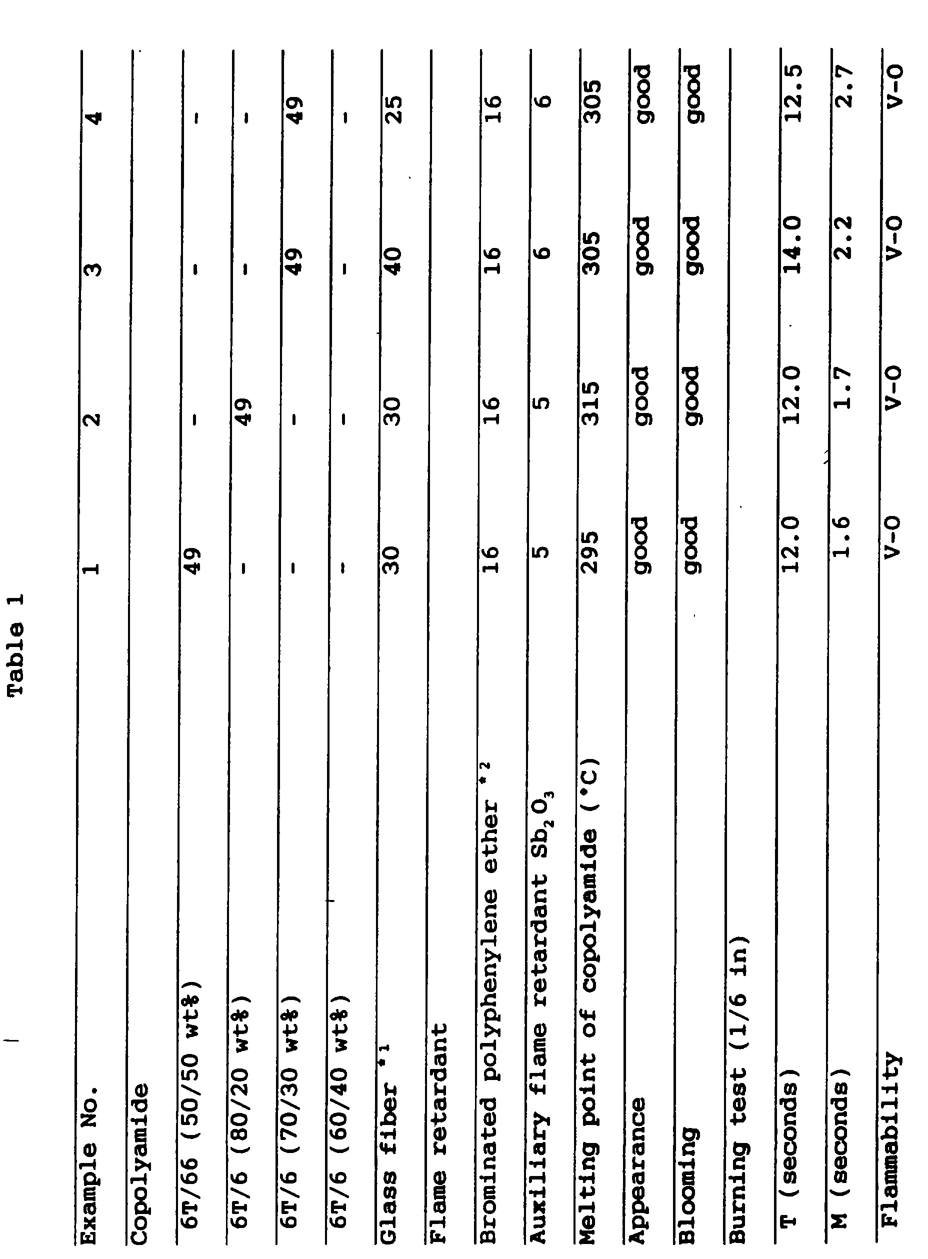

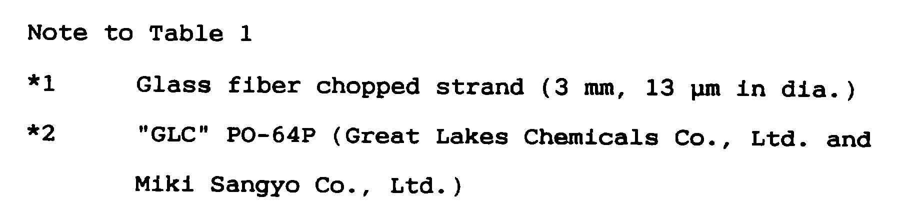

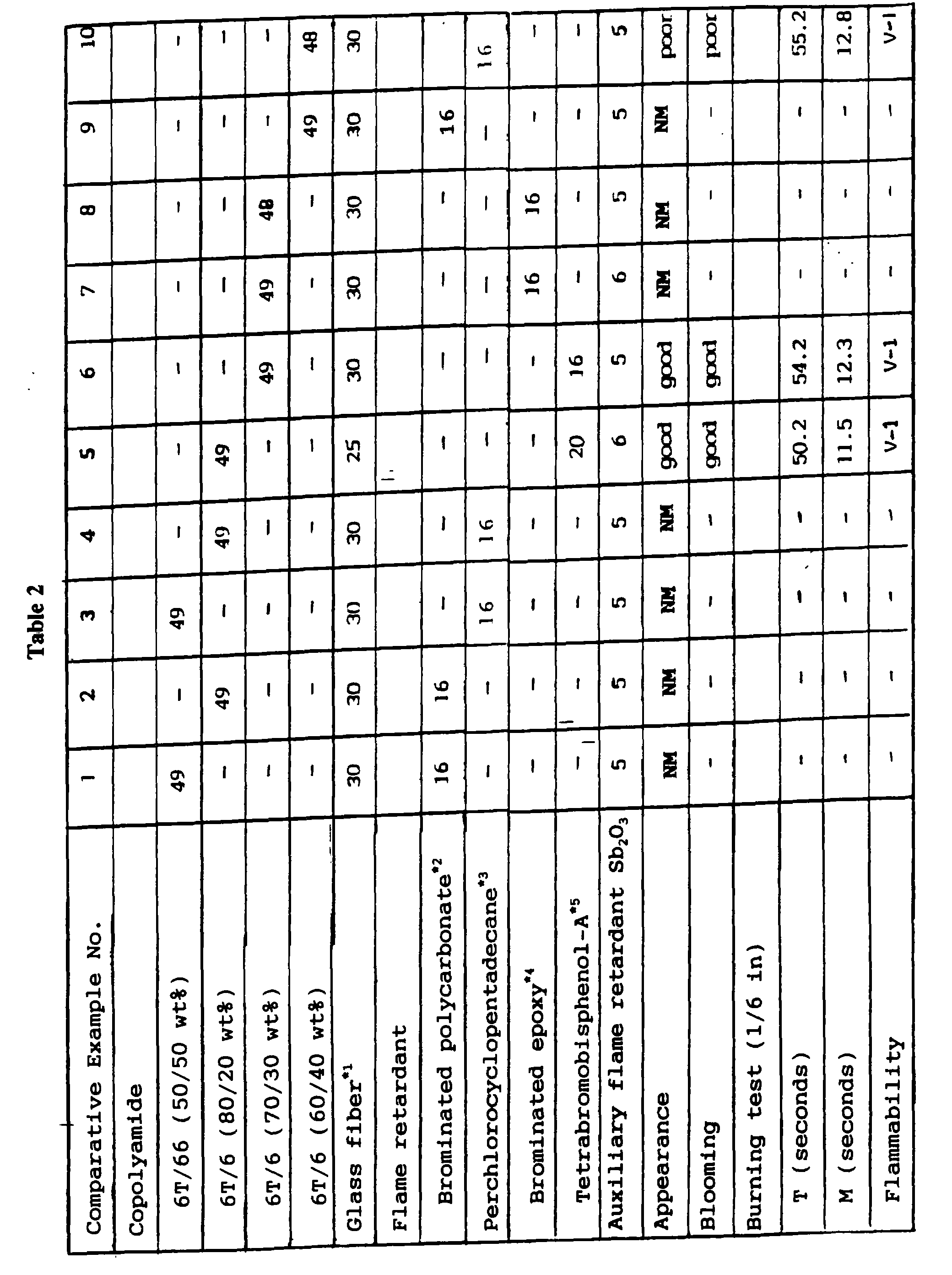

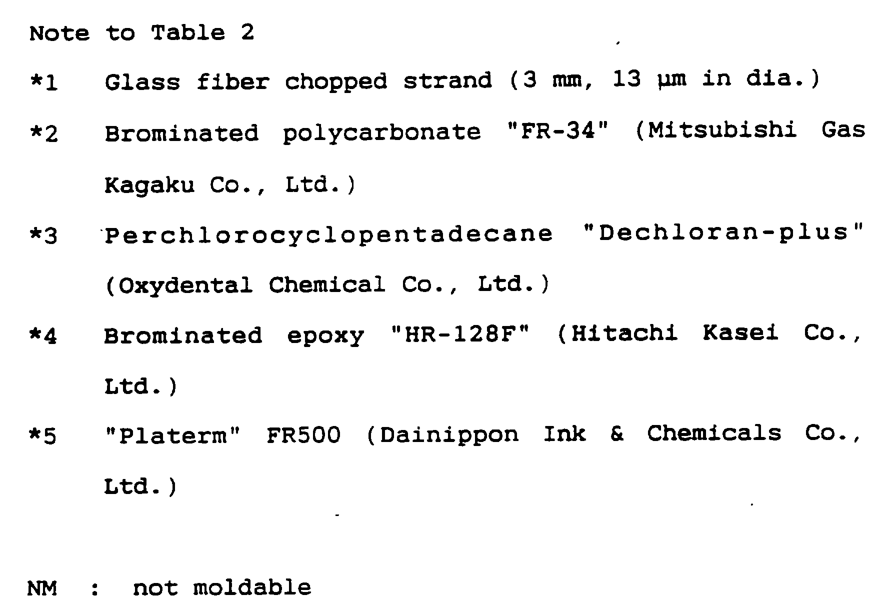

## Claims

1. A composition which comprises by weight of the total weight of the composition :
(A) 30-90 wt% of a nylon copolymer comprising 80-20 wt% of hexamethylene terephthalamide units and 20-80 wt% of hexamethylene adipamide or caproamide units,
(B) 5-35 wt% of a flame-retardant polymer consisting of a halogenated polyphenylene ether which polymer contains 50-70 wt% by weight of the polymer of halogen and has a weight-average molecular weight of at least 5000,
(C) 1-10 wt% of at least one auxiliary flame-retardant selected from antimony oxide, tin oxide, iron oxide, and zinc oxide, and
(D) 0-50 wt% of a reinforcing agent,
which composition is free from sodium antimonate.

2. A composition according to claim 1, in which the nylon copolymer is a copolymer of (a) hexamethylene terephthalamide and (b) hexamethylene adipamide.

3. A composition according to claim 1, in which the nylon copolymer is a copolymer of (a) hexamethylene terephthalamide and (c) caproamide.

4. A composition according to claim 3, in which the nylon copolymer comprises from 80-60 wt% hexamethylene terephthalamide units and from 20-40 wt% of caproamide units.

5. A composition according to any preceding claim, in which the auxiliary flame-retardant (C) is selected from at least one of antimony oxide and zinc oxide.

6. A composition according to any preceding claim, in which the nylon copolymer is one prepared by first forming a prepolymer condensate having a relative viscosity (measured in 1% sulphuric acid solution at 25°C) of 1.20 or less and a melting point of 250°C or lower and then solidpolymerizing the prepolymer condensate at a temperature within the range of from 150°C to the melting point of the nylon polymer inclusive.

## Patentansprüche

1. Zusammensetzung, umfassend an Gewicht bezogen auf das Gesamtgewicht der Zusammensetzung:
(A) 30-90 Gew.-% eines Nylon-Copolymers, umfassend 80-20 Gew.-% Hexamethylenterephthalamid-Einheiten und 20-80 Gew.-% Hexamethylen-adipamid- oder -caproamid-Einheiten,
(B) 5-35 Gew.-% eines flammhemmenden Polymers, bestehend aus einem halogenierten Polyphenylenether, welches Polymer 50-70 Gew.-% des Halogen-Polymers enthält und ein durchschnittliches Molekulargewicht von zumindest 5000 aufweist,
(C) 1-10 Gew.-% zumindest eines flammhemmenden Zusatzmittels, ausgewählt aus Antimonoxid, Zinnoxid, Eisenoxid und Zinkoxid, und
(D) 0-50 Gew.-% eines Verstärkungsmittels,
welche Zusammensetzung frei von Natriumantimonat ist.

2. Zusammensetzung nach Anspruch 1, worin das Nylon-Copolymer ein Copolymer von (a) Hexamethylenterephthalamid und (b) Hexamethylenadipamid ist.

3. Zusammensetzung nach Anspruch 1, worin das Nylon-Copolymer ein Copolymer von (a) Hexamethylenterephthalamid und (c) Caproamid ist.

4. Zusammensetzung nach Anspruch 3, worin das Nylon-Copolymer 80-60 Gew.-% Hexamethylenterephthalamid-Einheiten und 20-40 Gew.-% Caproamid-Einheiten umfaßt.

5. Zusammensetzung nach einem der vorhergehenden Ansprüche, worin das flammhemmende Zusatzmittel (C) aus zumindest einem von Antimonoxid und Zinkoxid ausgewählt ist.

6. Zusammensetzung nach einem der vorhergehenden Ansprüche, worin das Nylon-Copolymer hergestellt wird, indem zunächst ein Präpolymer-Kondensat mit einer relativen Viskosität (gemessen in 1%-iger Schwefelsäurelösung bei 25°C) von 1,20 oder weniger und einem Schmelzpunkt von 250°C oder niedriger gebildet und anschließend das Präpolymer-Kondensat bei einer Temperatur innerhalb des Bereichs von 150°C bis einschließlich des Schmelzpunkts des Nylon-Polymers festphasenpolymerisiert wird.

## Revendications

1. Composition qui contient, en poids du poids total de la composition :
(A) 30-90% en poids d'un copolymère de nylon comprenant 80-20% en poids d'unités d'hexaméthylène téréphtalamide et 20-80% en poids d'unités d'hexaméthylène adipamide ou caproamide.
(B) 5-35% en poids d'un polymère retardateur de flamme consistant en un polyphénylène éther halogéné, lequel polymère contient 50-70% en poids du polymère d'halogène ayant un poids moléculaire moyen en poids d'au moins 5000,
(C) 1-10% en poids d'au moins un ignifuge auxiliaire sélectionné parmi l'oxyde d'antimoine, l'oxyde d'étain, l'oxyde de fer et l'oxyde de zinc, et
(D) 0-50% en poids d'un agent de renforcement,
laquelle composition ne contient d'antimonate de sodium.

2. Composition selon la revendication 1, où le copolymère de nylon est un copolymère de (a) hexaméthylène téréphtalamide et (b) hexaméthylène adipamide.

3. Compositon selon la revendication 1, où le copolymère de nylon est un copolymère de (a) hexaméthylène téréphtalamide et (c) caproamide.

4. Composition selon la revendication 3, où le copolymère de nylon contient 80-60% en poids d'unités d'hexaméthylène téréphtalamide et 20-40% en poids d'unités de caproamide.

5. Composition selon toute revendication précédente, où l'ignifuge auxiliaire (C) est sélectionné parmi au moins l'un de l'oxyde d'antimoine et de l'oxyde de zinc.

6. Composition selon toute revendication précédente où le copolymère de nylon est préparé en formant d'abord un condensat d'un prépolymère ayant une viscosité relative (mesurée dans une solution à 1% d'acide sulfurique à 25°C) de 1,20 ou moins et un point de fusion de 250°C ou moins et puis en polymérisant en phase solide le condensat du prépolymère à une température comprise entre 150°C et le point de fusion du polymère de nylon inclus.
